# EUROPEAN PATENT SPECIFICATION

(11) **EP 2 426 168 B1**
(45) Date of publication and mention of the grant of the patent: **14.06.2017**
(21) Application number: 11179664.5
(22) Date of filing: 31.08.2011
(51) Int. Cl.: C08K 13/00, C08K 13/02

(54) **Imitation metal engineering plastic composite material and preparation method of the same**
Technisches Metallimitationskunststoffverbundmaterial und Herstellungsverfahren dafür
Matériau composite plastique d'ingénierie métallique d'imitation et son procédé de préparation

(30) Priority: 07.09.2010 CN 201010274925
(43) Date of publication of application: 07.03.2012
(73) Proprietor: Xiamen runner industrial corporation, Xiamen 361021 (CN)
(72) Inventor: Chen, Ming-hui, 361021 Xiamen (CN); Zhou, Guo-bo, 361021 Xiamen (CN); Huang, Xian-ming, 361021 Xiamen (CN); Lee, Min-zen, Xiamen 361021 (CN)
(74) Representative: Lang, Christian

(56) References cited:
- CN-A- 101 130 631

## Description

### BACKGROUND OF THE INVENTION

### 1. Field of the invention

The present invention relates to a polymer composite material, in particular to a high-density imitation metal engineering plastic composite material and its preparation method.

### 2. Description of Related Art

Metal products are high-priced and energy-consuming products. As environmental pollution becomes increasingly severe, energy saving and carbon reduction becomes an urgent issue to overcome, and finding a way of developing an engineering plastic composite material to substitute metal is highly technical and substantially significant, and has commercial value. The advantages of plastic include: (1) a low power consumption for molding and manufacturing processes (such as the plastic injection molding and extrusion processes with a manufacturing temperature of 180∼320 °C); (2) easy molding for mass producing components of complicated structures with reliable quality; (3) a low price of raw materials; and (4) an excellent corrosion resisting performance. On the other hand, the advantages of metal include: (1) excellent mechanical performance; (2) a high thermal deformation temperature; (3) easy electroplating; and (4) a high density (required in certain applications and situations).

Therefore, it is a valuable commercial production technique to combine plastic and metal while maintaining the advantages of both, and this technique demands immediate attentions and feasible solutions.

Adding a filler of a high density or ultra high density (over 10g/cm³) into plastic has been disclosed in the following patents and publications. U.S. Pat. No. 5,665,808 has disclosed a method of manufacturing a bullet by adding 60%∼70% of lead powder by weight into a thermoplastic resin, so that the specific gravity of the bullet reaches 7.36-8.26.

U.S. Pat. No. 5,616,642 has disclosed a method of manufacturing lead-free ammunition with a density of 3∼7g/cm³ by adding 85%∼93% of copper by weight tungsten powder, stainless steel powder or bismuth powder into a polyester resin.

P.R.C. Pat. No. CN 101130631A has disclosed a method of preparing an anti-radiation material with a final density of 7.6∼9.2g/cm³ by filling a molybdenum, palladium or lead powder with a density greater than 10g/cm³ into an engineering plastic material.

Until now, not too much research has been conducted towards imitation metal engineering plastic composite material with high density, good manufacturability, excellent mechanical performance, reasonable cost, and ease for manufacturing surface decorative products by electroplating or spray coating easily. In general, a large quantity of an inorganic filler such as a metal powder can be added into plastic to increase the material density, but the product so produced usually has a poor mechanical performance, a low thermal deformation temperature, a low surface luster, a defective surface of the product, and a failure of removing surface streaks of the product, and such product can be used for applications that do not require a high standard or quality in their appearance, and the product cannot satisfy the surface requirement of plastic products manufactured by surface decoration techniques such as electroplating and spray coating. At present, there is no plastic injection molding surface of the imitation metal engineering plastic composite material available in the market that can meet the electroplating requirement, and an expensive metal filler is generally added to the imitation metal plastic material, or complicated equipment and techniques are used and incur a high material cost and sacrifice the mechanical performance of the material, such that the applications of the material is significantly limited.

CN 101 130 631 A relates to a method for preparing a super-high density plastic, which contains 10% - 35% engineering plastics, 50% - 80% super-high density filling, 5% - 15% mechanical property modifier, 1% - 3% own make coupling agent and 0.1% - 0.5% anti-oxidant.

### SUMMARY OF THE INVENTION

In view of the imitation metal plastic composite material with widespread existing technical problems of poor mechanical performance, low molding flow, low surface luster of injection molded products, problemed surface of the product, and non-removable erasable surface streaks, it is a primary objective of the present invention to provide an imitation metal engineering plastic composite material by combining plastic and metal while maintaining the advantages of both plastic and metal.

This object is solved by the imitation metal engineering plastic composite material according to claim 1. Advantageous improvements are described by the dependent claim.

The composition of the imitation metal engineering plastic composite material comprises the following materials (in weight percentage):

| Engineering thermoplastic | (5%∼51%); |
|---|---|
| High-density filler | (42%∼90%); |
| Mineral powder | (0%∼33%); |
| Glass fiber | (0%∼29%); |
| Toughener | (3%∼20%); |
| Coupling agent | (0-5%∼4%); |
| Lubricant | (0.3%∼2%); and |
| Antioxidant | (0.2%∼0.5%). |

The engineering thermoplastic is one selected from polyamide (PA) or polybutylene terephthalate (PBT).

The high-density filler is a metal powder or its compound having a density of 4∼10g/cm³ and an average granule diameter of 0.1∼100µm, and the metal powder is one selected from the collection of iron powder, stainless steel powder, copper powder, nickel powder, zinc powder, ferric oxide, barium ferrite, strontium ferrite, zinc oxide, and barium sulfate and combinations thereof.

The mineral powder is an inorganic mineral powder with an average granule diameter of 0.1∼20µm, and the mineral powder is preferably one selected from the collection of talcum powder, calcium carbonate powder, wallastonite powder, and mica powder, and combinations thereof.

The glass fiber is selected from those having a diameter of 6∼20µm.

The toughener is one selected from the collection of polyamide elastomer, maleic anhydride grafted polyolefin elastomer and maleic anhydride grafted styrene elastomer.

The coupling agent is one selected from the collection of titanate coupling agent, aluminate coupling agent, zirconate coupling agent, and compounds of the silane coupling agent, and the titanate coupling agent is one selected from the collection of tri (dioctylphosphate) titanate, bis (dioctyl pyrophosphate) hydroxyacetic acid quaternary ammonium salt of titanium, diethylene bis (phenyl ethoxy phosphate) titanate, tetraisopropyl di(dioctylphosphate) titanate and titanium diisopropoxide bis(acetylacetonate); the aluminate coupling agent is one selected from the collection of Bis(ethyl acetoacetate) diisopropoxy aluminium, aluminium diisopropoxide bis(acetylacetonate), and distearoyl isopropoxy aluminate; the zirconate coupling agent is one selected from the collection of tetrakis(triethanloamino) zirconate, tetra-n-propyl zirconate, tetra-n-butyl zirconate, bis-citric acid diethyl ester n-propanolate zirconium chelate ; the silane coupling agent is one selected from the collection of N-(2-Aminoethyl) 3-aminopropyl) trimethoxysilane, N-(2-aminoethyl) 3-aminopropyltriethoxysilane, 3-aminopropyl)trimethoxysilane, 3-aminopropyltriethoxysilane, 3-ureidopropyltrimethoxysilane, 3-glycidyloxypropyltrimethoxysilane.

The lubricant is one selected from the collection of ethylene bis stearamide, ethylene bis lauramide, ethylene bis oleamide, ethylene bis stearamide graft modification substance, fluoroelastomer, polytetrafluoroethylene powder, and combinations thereof.

The antioxidant is one selected from the collection of tetrakis[methylene-β-(3,5-di-tert-butyl-4-hydroxyphenyl)-propionate]methane (hereinafter referred to as "antioxidant 1010"), and tris(2,4-di-tert-butylphenyl) phosphate (hereinafter referred to as "antioxidant 168") compounds.

The imitation metal engineering plastic composite material can be prepared by the following two methods:
Method 1 comprises the following steps:
   Step 1: Mix, stir, and dry a high-density filler and a mineral powder.
      In Step 1, the high-density filler and mineral powder are added into a mixing machine and stirred at a rotating speed of 1000rpm for 20∼60 minutes, and dried at a drying temperature of 120°C.
   Step 2: Spray a coupling agent into the rotating high-density filler and mineral powder and keep stirring; and then add a lubricant and keep stirring; and then add an engineering thermoplastic, an antioxidant and a toughener and keep stirring to obtain a mixed material.
      In Step 2, the high-density filler and mineral powder are stirred at a rotating speed of 2000 rpm for 20∼30 minutes; and stirring continues at a rotating speed of 2000 rpm for 5∼10 minutes; and stirring continues at a rotating speed of 2000 rpm for 10∼20 minutes
   Step 3: Put the mixed material obtained from Step 2 into a twin-screw extrusion granulator to go through a melt extrusion process to form wires, and then cooling and dicing the wires to produce imitation metal engineering plastic composite granules.
      In Step 3, the mixed material obtained from Step 2 is put into the twin-screw extrusion granulator and processed by a melt extrusion process to form wires, and cooling and dicing processes with the following conditions and technical parameters: an auxiliary feeding system is used to add the mixed material at a feeding speed of 60∼120 rpm.; a lateral feeding system is used to add the glass fiber at a feeding speed of 40∼110 rpm.; the host screw rotating speed is 250∼350 rpm; the manufacturing temperature is 160∼320°C; the die pressure is 1.0∼6.0MPa; and the dicing speed of the granulator is 200∼400 rpm.
   Step 4: Put the imitation metal engineering plastic composite granules obtained from Step 3 into a plastic injection molding machine to injection mold the granules in order to obtain the imitation metal engineering plastic composite material.
      In Step 4, the plastic injection molding machine can be a twin-alloy screw plastic injection molding machine; and the technical parameters of the plastic injection molding process include: a plastic injection molding temperature of 240∼350°C, and a mold temperature of 100∼150°C.
Method 2 comprises the following steps:
   Step 1: Put the high-density filler and the mineral powder into a kneader, and add a coupling agent after a first knead is completed, and then perform a second knead and add a lubricant after the second knead is completed, and then perform a third knead and add an engineering thermoplastic, a toughener and an antioxidant after the third knead is completed, and perform a fourth knead to obtain a smooth lump.
      In Step 1, the high-density filler and the mineral powder are kneaded in the first knead at a temperature of 200°C and a rotating speed of 23rpm for 10∼20 min; and then kneaded in the second knead at a rotating speed of 35rpm for 5∼15 minutes; and then kneaded in the third knead at a rotating speed of 23rpm for 2∼5 minutes; and then kneaded in the fourth knead at a rotating speed of 35rpm for 10∼20 minutes
   Step 2: Blank the smooth lumps obtained from Step 1 into a single-screw extruder, and process the smooth lumps by melt extrusion to produce wires, and then cool and dice the wires to produce imitation metal engineering plastic composite granulates.
      In Step 2, the smooth lumps obtained from Step 1 are emptied into the single-screw extruder, and processed by the melt extrusion to produce wires, and the technical parameters of the cooling and dicing processes include a granulator temperature of 120∼220 °C and a dicing speed of the granulator of 200∼400 rpm.
   Step 3: Put the imitation metal engineering plastic composite granules obtained from Step 2 into a plastic injection molding machine, and perform a plastic injection molding process to obtain an imitation metal engineering plastic composite material.
      In Step 3, the plastic injection molding machine is a twin-alloy screw plastic injection molding machine; and the technical parameters of the plastic injection molding process include a plastic injection molding temperature of 240∼350°C and a mold temperature of 100∼150 °C.

The imitation metal engineering plastic composite material prepared by the method of the present invention has the following advantages:
(1) High Density: According to the calculation of the composition, the imitation metal engineering plastic composite material has a density of 1.8∼4.2g/cm³, which is higher than the density (0.8∼1.5g/cm³) of a general plastic material and suitable for manufacturing components of a high specific gravity.
(2) High Mechanical Performance: Mechanical performance test results show that the imitation metal engineering plastic composite material has a tensile strength up to 45∼120MPa, and an izod impact strength up to 50∼130J/m, which can meet the mechanical performance requirement of engineering plastic material.
(3) Excellent Thermal Deformation Temperature : Thermal deformation temperature test results show that the imitation metal engineering plastic composite material has a thermal deformation temperature of up to 110∼200 °C (Load 1.8MPa) which is higher than the thermal deformation temperature around 80 °C of the conventional electroplatable acrylonitrile-butadiene-styrene copolymer (ABS) and can meet the high thermal deformation temperature requirement for various metal surface treatments (including the electroplating, spray painting, dusting and physical vapor deposition treatments) of the material.
(4) Good Plastic Injection Molding Manufacturability: The imitation metal engineering plastic composite material can be injection molded by a general plastic injection molding machine, and the injection molded plastic product has a smooth surface which is very suitable for a metal surface treatment (including the electroplating, spray painting, dusting, and physical vapor deposition treatments), and particularly applicable for sanitary ware, electric appliances, automobiles and the electronics industry.

The present invention adopts a method of combining coupling agents and an optimal dicing condition, a simple and easy technique, and a general twin-screw granulator for the extrusion and dicing processes, and further adopts a general plastic injection molding machine for the plastic injection molding process.

The engineering thermoplastic of the present invention selects a low-priced and high-density filler as a main-body filler to increase the material density and adopts a simple and easy extrusion granulation technique and a general plastic injection molding machine for the plastic injection molding process to lower the energy consumption when manufacturing, the manufacturing cost and the material cost. With the appropriate proportion, the material has a density limited to a specific range (and the material density falls within the range of 1.8∼4.2g/cm³), such that products manufactured by the material has the cold feel and weight of the metal, while maintaining good mechanical strength, flexibility, thermal denaturation temperature and manufacturability of the material. In addition, the mixed material prepared according to the composition can be diced, and the plastic injection molding technique can be used for producing a product with an appropriate specific gravity, flexibility, strength, surface smoothness, high luster, free of pitting, and free of streaks, and satisfying the metal decorative surface requirements of a plastic product, and the electroplating, spray painting, dusting, and physical vapor deposition treatments can be applied to the surface of the plastic products for external components of electric appliances, automobiles, sanitary ware and related products to substitute metal parts such as hazardous lead and its alloys, so as to achieve the environmental protection effect.

The preparation method of an imitation metal engineering plastic composite material in accordance with the present invention has the following advantages and effects:
(1) The coupling agent is a combined coupling agent used for processing the high-density filler and mineral powder. Compared with the conventional single coupling agent processing method, this method can improve the compatibility of the high-density filler and mineral powder with the engineering thermoplastic, so that the imitation metal plastic composite material can maintain a high strength, tenacity and thermal deformation temperature.
(2) The engineering thermoplastic is selected from high-liquidity polyamide (PA) or polybutylene terephthalate (PBT) which tends to cover the surface of the high-density filler, mineral powder and glass fiber, so that the mixing system still has an excellent manufacturability even when large quantities of high density filler are used.
(3) The lubricant is selected from ethylene bis stearamide, ethylene bis lauramide, ethylene bis oleamide, fluoroelastomer, or polytetrafluoroethylene with a higher thermal resisting temperature to lower the heat of the manufacturing process effectively and reduce the wear of the plastic and the thermal decomposition of plastic, so that the material can be extruded, granulated and injection molded more easily. The addition of this lubricant can improve the surface luster and the molding liquidity of the material to provide a much better surface luster and flatness, compared with products of this kind, and the material can be applied to electroplating or spray coating a surface.
(4) As to the high-density filler, mineral powder and glass fiber, although some of the high-density fillers included in the material of the present invention have been used in certain related applications, yet this material has made a strict and clear definition on the granule diameter and density, and the specific details are given below:
   (a) The material of the present invention limits the use of high-density fillers to the high-density metal powder, metal oxide or metal sulfate, such that the manufactured imitation metal plastic material has a much lower cost than the engineering plastic material.
   (b) The high-density fillers of the present invention limit their density to the range of 4.0-10.0 g/cm³ and an average granule diameter of 0.1∼100µm to assure that the imitation metal engineering plastic composite material has higher density, excellent mechanical performance and surface quality.
   (c) With the respective advantages of the high-density filler, mineral powder, and glass fiber, the mechanical performance of each item in the imitation metal engineering plastic composite material can be balanced to provide an imitation metal engineering plastic composite material with an excellent mechanical performance.

The composition (in weight percentage) of the imitation metal engineering plastic composite material prepared in accordance with the method of the present invention has the following effects:
(1) Proportion of the high-density filler: The proportion of the high-density filler is limited to the range of 42∼90%, so that the imitation metal engineering plastic composite material has a density of 1.8∼4.2g/cm³ and such a high density can maintain good processing flow and mechanical performance.
(2) Proportion of the lubricant: The lubricant has a proportion of 0.5%∼2.0% of the total weight, and an appropriate proportion of a high performance lubricant not only maintains the mechanical performance and electroplating of the material, but also reduces the shear heat of the material significantly so as to reduce the wear on the equipment and the thermal decomposition of the material, so that this material has a better manufacturing molding property than other materials of this kind. The invention can improve the surface luster of the product, and manufacture products with extraordinarily high luster and flat surfaces.
(3) The proportion of the toughener is preferably equal to 3%∼20% of the total weight in order to provide good tenacity to the material while maintaining an appropriate rigidity of the material and satisfy the mechanical performance requirement of the material for the appearance of a product.

### BRIEF DESCRIPTION OF THE DRAWINGS

No figure is provided.

### DETAILED DESCRIPTION OF THE INVENTION

### [Embodiment 1]

The composition of the imitation metal engineering plastic composite material of this embodiment includes: 22.5% by weight of polycaprolactam, 70% by weight of a ferrite, 5% by weight of a maleic anhydride grafted ethylene-octene copolymer, 1.5% by weight of a coupling agent, 0.5% by weight of ethylene bis stearamide, and 0.5% by weight of an antioxidant 1010.

The preparation method of the imitation metal engineering plastic composite material of this preferred embodiment comprises the following steps:
Step 1: Weigh a ferrite according to a weight percentage; add the ferrite into a high-speed mixing machine; stir the ferrite at a rotating speed of 1000rpm for 20∼60 minutes; and dry the ferrite at a temperature up to 120 °C.
Step 2: Weigh a coupling agent according to the weight percentage; and spray the coupling agent uniformly onto the mixing ferrite.
Step 3: Keep stirring at a high rotating speed of 2000rpm for 20∼30 minutes after spraying the coupling agent; add the ethylene bis stearamide weighed according to the weight percentage; keep stirring at the rotating speed of 2000 rpm for 5∼10 minutes; add the polycaprolactam, antioxidant 1010 and maleic anhydride grafted ethylene-octene copolymer weighed according to the weight percentage; and keep stirring at the high rotating speed of 2000 rpm for 10∼20 minutes to obtain a mixed material.
Step 4: Put the mixed material obtained from Step 3 into a twin-screw extrusion granulator, and process the wires by melt extrusion, and cool and dice the wires to produce imitation metal engineering plastic composite granules, and the technical parameters and conditions include: using an auxiliary feeding system to add the mixed material at a feeding speed of 80 rpm; a host screw rotating speed of 260 rpm; a first-area temperature of 220°C; a second-area temperature of 225 °C; a third-area temperature of 230 °C; a fourth-area temperature of 235 °C; a fifth-area temperature of 240 °C; a sixth-area temperature of 245 °C, a seventh-area temperature of 250 °C; an eighth-area temperature of 255 °C, a ninth-area temperature of 255°C; a tenth-area temperature of 255 °C, a die temperature of 250 °C; and a dicing speed of the granulator of 200 rpm.
Step 5: Put the imitation metal engineering plastic composite granules into the plastic injection molding machine, wherein the technical parameters and conditions of the injection molded product include: a first-stage temperature of 250 °C, a second-stage temperature of 260 °C, a third-stage temperature of 270 °C, a fourth-stage temperature of 280 °C, a nozzle temperature of 275 °C, and a mold temperature of 120 °C.

The product manufactured according to the aforementioned composition and technique has a density of 2.43g/cm³, a tensile strength of 63MPa, an izod impact strength of 70J/m, and a thermal deformation temperature of 105 °C, and the product surface comes with a high luster, and free of pitting and wavy lines.

### [Embodiment 2]

The composition of the imitation metal engineering plastic composite material of this embodiment includes: 11.5% by weight of polycaprolactam, 60% by weight of a ferrite, 15% by weight of zinc oxide, 11% by weight of a polyamide elastomer, 1.5% by weight of a coupling agent, 0.5% by weight of ethylene bis stearamide, and 0.5% by weight of antioxidant 1010.

The preparation method of the imitation metal engineering plastic composite material of this preferred embodiment comprises the following steps:
Step 1: Weigh a ferrite and zinc oxide according to the weight percentage; add the ferrite and zinc oxide into a high-speed mixing machine; stir the ferrite and zinc oxide at a rotating speed of 1000 rpm for 20∼60 minutes; and dry the ferrite and zinc oxide to a temperature of 120 °C.
Step 2: Weigh a coupling agent according to the weight percentage; and spray the coupling agent uniformly onto the mixing ferrite and zinc oxide.
Step 3: Keep stirring at a high rotating speed of 2000 rpm for 20∼30 minutes after spraying the coupling agent; add the ethylene bis stearamide weighed according to the weight percentage; keep stirring at the high rotating speed of 2000 rpm for approximately 5∼10 min; and then add the polycaprolactam, antioxidant 1010 and polyamide elastomer weighed according to the weight percentage; and keep stirring at the high rotating speed of 2000 rpm for 10∼20 minutes to obtain a mixed material.
Step 4: Put the mixed material obtained from Step 3 into a twin-screw extrusion granulator; process the mixed material by melt extrusion to produce wires; cool and dice the wires to obtain imitation metal engineering plastic composite granules. The technical parameters and conditions are listed in details as follows: an auxiliary feeding system for adding a mixed material at a feeding speed of 80 rpm; a host screw rotating speed of 280 rpm; a first-area temperature of 225 °C; a second-area temperature of 230 °C; a third-area temperature of 235 °C; a fourth-area temperature of 240°C; a fifth-area temperature of 245 °C; a sixth-area temperature of 250 °C; a seventh-area temperature of 255 °C; an eighth-area temperature of 260 °C; a ninth-area temperature of 260 °C; a tenth-area temperature of 260 °C; a die temperature of 255 °C; a dicing speed of the granulator of 200 rpm.
Step 5: Put the imitation metal engineering plastic composite granules into the plastic injection molding machine, and the technical parameters for manufacturing the injection molded product include: a first-stage temperature of 255 °C, a second-stage temperature of 265 °C, a third-stage temperature of 275 °C, a fourth-stage temperature of 285 °C, a nozzle temperature of 280 °C, and a mold temperature of 120 °C.

The product manufactured according to the aforementioned composition and technique has a density of 2.68g/cm³, a tensile strength of 60MPa, an izod impact strength of 67J/m, a thermal deformation temperature of 105 °C, and the product comes with a high surface luster, and free of pitting and wavy lines.

### [Embodiment 3]

The composition of the imitation metal engineering plastic composite material of this embodiment includes: 40% by weight of polybutylene terephthalate, 5% by weight of a maleic anhydride grafted ethylene-propylene copolymer, 45% by weight of an iron powder, 8% by weight of a glass fiber, 1.0% by weight of a coupling agent, 0.3% by weight of antioxidant 1010, and 0.2% by weight of antioxidant 168.

The preparation method of the imitation metal engineering plastic composite material of this preferred embodiment comprises the following steps:
Step 1: Weigh an iron powder according to the weight percentage; add the iron powder into a high-speed mixing machine; stir the iron powder at a rotating speed of 1000 rpm for 20∼60 minutes; and dry the iron powder to a temperature up to 120 °C.
Step 2: Weigh a coupling agent according to the weight percentage; and spray the coupling agent onto the mixing iron powder uniformly.
Step 3: Keep stirring at a rotating speed of 2000 rpm for 20∼30 minutes after spraying the coupling agent; weigh ethylene bis stearamide according to the weight percentage, and keep stirring at the rotating speed of 2000 rpm for approximately 5∼10 minutes; add the polybutylene terephthalate, antioxidant 1010, antioxidant 168 and maleic anhydride grafted ethylene-propylene copolymer weighed according to the weight percentage, and keep stirring at the high rotating speed of 2000 rpm for 10∼20min to obtain a mixed material.
Step 4: Put the mixed material obtained from Step 3 into a twin-screw extrusion granulator; process the mixed material by melt extrusion to produce wires; cooling and dicing the wires to obtain imitation metal engineering plastic composite granules, wherein the specific technical parameters and conditions are given as follows: an auxiliary feeding system provided for adding the mixed material at a feeding speed of 80 rpm; a lateral feeding system provided for adding the glass fiber at a feeding speed of 40 rpm; a host screw rotating speed of 300 rpm; a first-area temperature of 210 °C, a second-area temperature of 215 °C, a third-area temperature of 220 °C, a fourth-area temperature of 225 °C, a fifth-area temperature of 230 °C, a sixth-area temperature of 235 °C, a seventh-area temperature of 240 °C, an eighth-area temperature of 245 °C, a ninth-area temperature of 250 °C, a tenth-area temperature of 250 °C, a die temperature of 245 °C, and a dicing speed of 250 rpm.
Step 5: Put the imitation metal engineering plastic composite granules into the plastic injection molding machine, and the technical parameters for manufacturing the injection molded product include: a first-stage temperature of 240 °C, a second-stage temperature of 245 °C, a third-stage temperature of 255 °C, a fourth-stage temperature of 265 °C, a nozzle temperature of 260 °C, and a mold temperature of 140 °C.

The product manufactured according to the aforementioned composition and technique has a density of 1.91g/cm³, a tensile strength of 45MPa, an izod impact strength of 55J/m, and a thermal deformation temperature of 133 °C; and the product comes with a high surface luster and free of pitting and wavy lines.

### [Embodiment 4]

The composition of the imitation metal engineering plastic composite material of this embodiment includes: 30.9% by weight of polycaprolactam, 7.6% by weight of a maleic anhydride grafted ethylene-octene copolymer, 40% by weight of barium sulfate, 5% by weight of an iron powder, 15% by weight of a glass fiber, 0.6% by weight of a coupling agent, 0.2% by weight of antioxidant 1010, and 0.2% by weight of antioxidant 168.

Step 1: Weigh barium sulfate and iron powder according to the weight percentage; add the barium sulfate and iron powder into a high-speed mixing machine; stir the barium sulfate and iron powder at a rotating speed of 1000 rpm for 20∼60 minutes; and dry the barium sulfate and iron powder to a temperature up to 120 °C.

Step 2: Weigh a coupling agent according to the weight percentage; and spray the coupling agent onto the mixing barium sulfate and iron powder uniformly.

Step 3: Keep stirring at the high rotating speed of 2000 rpm for 20∼30 minutes after spraying the coupling agent; add the ethylene bis lauramide weighed according to the weight percentage, and keep stirring at the high rotating speed of 2000 rpm for 5∼10 minutes; add the polycaprolactam, antioxidant 1010, antioxidant 168 and maleic anhydride grafted ethylene-octene copolymer weighed according to the weight percentage, and keep stirring at the high rotating speed of 2000 rpm for 10∼20 minutes to obtain the mixed material.

Step 4: Put the mixed material obtained from Step 3 into a twin-screw extrusion granulator; process the mixed material by melt extrusion to produce wires; cool and dice the wires to obtain imitation metal engineering plastic composite granules. The specific technical parameters and conditions include: an auxiliary feeding system used for adding the mixed material at a feeding speed of 80 rpm; a lateral feeding system used for adding the glass fiber at a feeding speed of 75 rpm; a host screw rotating speed of 300 rpm; a first-area temperature of 210 °C, a second-area temperature of 215 °C, a third-area temperature of 220 °C, a fourth-area temperature of 225 °C, a fifth-area temperature of 230 °C, a sixth-area temperature of 235 °C, a seventh-area temperature of 240 °C, an eighth-area temperature of 245 °C, a ninth-area temperature of 250 °C, a tenth-area temperature of 250 °C, a die temperature of 245 °C; and a dicing speed of 250 rpm.

Step 5: Put the imitation metal engineering plastic composite granules into the plastic injection molding machine. The technical parameters for manufacturing the injection molded product include: a first-stage temperature of 250 °C, a second-stage temperature of 260 °C, a third-stage temperature of 270 °C, a fourth-stage temperature of 280 °C, a nozzle temperature of 275 °C, and a mold temperature of 140 °C.

The product manufactured according to the aforementioned composition and technique has a density of 1.82g/cm³, a tensile strength of 75MPa, an izod impact strength of 132J/m, and a thermal deformation temperature of 172 °C; and the product comes with a high surface luster and free of pitting and wavy lines.

### [Embodiment 5]

The composition of the imitation metal engineering plastic composite material of this embodiment includes: 6.3% by weight of polycaprolactam, 15% by weight of polyhexamethylene adipamide, 7.5% by weight of a maleic anhydride grafted ethylene-octene copolymer, 55% by weight of an iron powder, 15% by weight of a glass fiber, 0.5% by weight of a coupling agent, 0.2% by weight of antioxidant 1010, and 0.1% by weight of antioxidant 168.

Step 1: Weigh an iron powder according to the weight percentage; add the iron powder into a high-speed mixing machine; stir the iron powder at a rotating speed of 1000 rpm for 20∼60 minutes; and dry the iron powder to a temperature up to 120 °C.

Step 2: Weigh a coupling agent according to the weight percentage; and spray the coupling agent uniformly onto the stirring iron powder.

Step 3: Keep stirring at a high rotating speed of 2000 rpm for 20∼30 minutes after spraying the coupling agent; add the polytetrafluoroethylene powder weighed according to the weight percentage, and keep stirring at the high rotating speed of 2000 rpm for 5∼10 minutes; add the polycaprolactam, polyhexamethylene adipamide , antioxidant 1010, antioxidant 168 and maleic anhydride grafted ethylene-octene copolymer weighed according to the weight percentage, and keep stirring at the high rotating speed of 2000 rpm for 10∼20 minutes to obtain a mixed material.

Step 4: Put the mixed material obtained from Step 3 into a twin-screw extrusion granulator; process the mixed material by melt extrusion to produce wires; cool and dice the wires to obtain imitation metal engineering plastic composite granules. The specific technical parameters and conditions include: an auxiliary feeding system used for adding the mixed material at a feeding speed of 80 rpm; a lateral feeding system used for adding the glass fiber at feeding speed of 100 rpm; a host screw rotating speed of 300 rpm; a first-area temperature of 210 °C, a second-area temperature of 215 °C, a third-area temperature of 220 °C, a fourth-area temperature of 225 °C, a fifth-area temperature of 230 °C, a sixth-area temperature of 235 °C, a seventh-area temperature of 240 °C, an eighth-area temperature of 245 °C, a ninth-area temperature of 250 °C, a tenth-area temperature of 250 °C, a die temperature of 245 °C; and a dicing speed of 250 rpm.

Step 5: Put the imitation metal engineering plastic composite granules into the plastic injection molding machine. The technical parameters for manufacturing the injection molded product include: a first-stage temperature of 250 °C, a second-stage temperature of 260 °C, a third-stage temperature of 270 °C, a fourth-stage temperature of 280 °C, a nozzle temperature of 275 °C, and a mold temperature of 140 °C.

The product manufactured according to the aforementioned composition and technique has a density of 2.21g/cm³, a tensile strength of 112MPa, an izod impact strength of 108J/m, and a thermal deformation temperature of 167 °C; and the product comes with a high surface luster and free of pitting and wavy lines.

### [Embodiment 6]

The composition of the imitation metal engineering plastic composite material of this embodiment includes: 12% by weight of polycaprolactam, 7% by weight of polyhexamethylene adipamide, 75% by weight of a ferrite, 3% by weight of a maleic anhydride grafted ethylene-octene copolymer, 0.5% by weight of ethylene bis stearamide, 2% by weight of a coupling agent, and 0.5% by weight of antioxidant 1010.

Step 1: Weigh a ferrite according to a weight percentage; add the ferrite into a high-speed mixing machine; stir the ferrite at a rotating speed of 1000 rpm for 20∼60 minutes; and dry the ferrite to a temperature up to 120 °C.

Step 2: Weigh a coupling agent according to the weight percentage; and spray the coupling agent onto the stirring ferrite uniformly.

Step 3: Keep stirring at the high rotating speed of 2000 rpm for 20∼30 minutes after spraying the coupling agent; add the ethylene bis stearamide weighed according to the weight percentage, and keep stirring at the high rotating speed of 2000 rpm for 5∼10 minutes; add the polycaprolactam, polyhexamethylene adipamide , antioxidant 1010 and maleic anhydride grafted ethylene-octene copolymer weighted according to the weight percentage, and keep stirring at the high rotating speed of 2000 rpm for 10∼20 minutes to obtain a mixed material.

Step 4: Put the mixed material obtained from Step 3 into a twin-screw extrusion granulator; process the mixed material by melt extrusion to produce wires; cool and dice the wires to obtain imitation metal engineering plastic composite granules. The specific technical parameters and conditions include: an auxiliary feeding system used for adding the mixed material at a feeding speed of 80 rpm; a host screw rotating speed of 320 rpm; a first-area temperature of 240 °C, a second-area temperature of 245 °C, a third-area temperature of 250 °C, a fourth-area temperature of 255 °C, a fifth-area temperature of 255 °C, a sixth-area temperature of 260 °C, a seventh-area temperature of 265 °C, an eighth-area temperature of 270 °C, a ninth-area temperature of 270 °C, a tenth-area temperature of 270 °C, a die temperature of 265 °C; and a dicing speed of 200 rpm.

Step 5: Put the imitation metal engineering plastic composite granules into the plastic injection molding machine. The technical parameters for manufacturing the injection molded product include: a first-stage temperature of 255 °C, a second-stage temperature of 265 °C, a third-stage temperature of 275 °C, a fourth-stage temperature of 285 °C, a nozzle temperature of 280 °C, and a mold temperature of 140 °C.

The product manufactured according to the aforementioned composition and technique has a density of 2.60g/cm³, a tensile strength of 56MPa, an izod impact strength of 67J/m, and thermal deformation temperature of 123 °C; and the product comes with a high surface luster and free of pitting and wavy lines.

### [Embodiment 7]

The composition of this embodiment is the same as that of Embodiment 6, and the material is prepared by Method 2, comprising the following steps:
Step 1: Weigh a ferrite according to the weight percentage; put the ferrite into a kneader; knead the ferrite at a temperature of 200 °C and a rotating speed of 23 rpm for 15 minutes, and then add a coupling agent.
Step 2: Keep kneading at a rotating speed of 35 rpm for 10 minutes; and then add ethylene bis stearamide.
Step 3: Keep kneading at a rotating speed of 23 rpm for 3 minutes; add polycaprolactam, polyhexamethylene adipamide , maleic anhydride grafted ethylene-octene copolymer and antioxidant 1010 and keep kneading at the rotating speed 35 rpm for 15 minutes to obtain a smooth lump.
Step 4: Empty the lump obtained from Step 3 immediately into a single-screw extruder; process the lump by melt extrusion to produce wires; cool and dice the wires to obtain imitation metal engineering plastic composite granules. The specific technical parameters include: a first-area temperature of 180 °C, a second-area temperature of 170 °C, a third-area temperature of 165 °C, a fourth-area temperature of 160 °C, and a die temperature 165 °C.
Step 5: Put the imitation metal engineering plastic composite granules into the plastic injection molding machine. The technical parameters of manufacturing the injection molded product include: a first-stage temperature of 255 °C, a second-stage temperature of 265 °C, a third-stage temperature of 275 °C, a fourth-stage temperature of 285 °C, a nozzle temperature of 280 °C, and a mold temperature of 140 °C.

The product manufactured according to the aforementioned composition and technique has a density of 2.75g/cm³, a tensile strength of 58MPa, an izod impact strength of 70J/m, and a thermal deformation temperature of 125 °C; and the product comes with a high surface luster and free of pitting and wavy lines.

### [Embodiment 8]

The composition of the imitation metal engineering plastic composite material of this embodiment includes: 13% by weight of polycaprolactam, 4% by weight of a maleic anhydride grafted styrene-ethylene/butene-styrene block copolymer, 73% by weight of an iron powder, 8% by weight of a glass fiber, 0.7% by weight of ethylene bis stearamide, 1% by weight of a coupling agent, and 0.3% by weight of antioxidant 1010.

Step 1: Weigh an iron powder according to the weight percentage; put the iron powder into a high-speed mixing machine; stir the iron powder at a rotating speed of 1000 rpm for 20-60 minutes; and dry the iron powder to a temperature up to 120 °C.

Step 2: Weigh a coupling agent according to the weight percentage; and spray the coupling agent uniformly onto the stirring iron powder.

Step 3: Keep stirring at a high rotating speed of 2000 rpm for 20∼30 minutes after spraying the coupling agent; add the ethylene bis stearamide weighed according to the weight percentage, and keep stirring at the high rotating speed of 2000 rpm for 5∼10 minutes; add the polycaprolactam, antioxidant 1010 and maleic anhydride grafted styrene-ethylene/butene-styrene block copolymer weighted according to the weight percentage, and keep stirring at the high rotating speed of 2000 rpm for 10∼20 minutes to obtain a mixed material.

Step 4: Put the mixed material obtained from Step 3 into a twin-screw extrusion granulator; process the mixed material by melt extrusion to produce wires; cool and dice the wires to obtain imitation metal engineering plastic composite granules. The specific technical parameters and conditions include: an auxiliary feeding system used for adding the mixed material at a feeding speed of 80 rpm; a lateral feeding system used for adding the glass fiber at a feeding speed of 80 rpm; a host screw rotating speed of 280 rpm; a first-area temperature of 225 °C, a second-area temperature of 230 °C, a third-area temperature of 235 °C, a fourth-area temperature of 240 °C, a fifth-area temperature of 245 °C, a sixth-area temperature of 250 °C, a seventh-area temperature of 255 °C, an eighth-area temperature of 255 °C, a ninth-area temperature of 260 °C, a tenth-area temperature of 260 °C, a die temperature of 250 °C, and a dicing speed of 350 rpm.

Step 5: Put the imitation metal engineering plastic composite granules into the plastic injection molding machine. The technical parameters used for manufacturing the injection molded product include: a first-stage temperature of 260 °C, a second-stage temperature of 270 °C, a third-stage temperature of 280 °C, a fourth-stage temperature of 290 °C, a nozzle temperature of 285 °C, and a mold temperature of 140 °C.

The product manufactured according to the aforementioned composition and technique has a density of 3.38g/cm³; a tensile strength of 56MPa; an izod impact strength of 78J/m, and a thermal deformation temperature of 153 °C; and the product comes with a high surface luster and free of pitting and wavy lines.

### [Embodiment 9]

The composition of the imitation metal engineering plastic composite material of this embodiment includes: 19.6% by weight of polycaprolactam, 60% by weight of zinc oxide, 6% by weight of wallastonite, 3.6% by weight of a maleic anhydride grafted ethylene-octene copolymer, 9% by weight of a glass fiber, 0.8% by weight of a coupling agent, and 0.3% by weight of antioxidant 1010.

Step 1: Weigh the zinc oxide and wallastonite according to the weight percentage, and add the zinc oxide and wallastonite into a high-speed mixing machine and stir the zinc oxide and wallastonite at a rotating speed of 1000 rpm for 20∼60 minutes, and dry the zinc oxide and wallastonite to a temperature up to 120 °C.

Step 2: Weigh a coupling agent according to the weight percentage; and spray the coupling agent onto the zinc oxide and wallastonite uniformly.

Step 3: Keep stirring at a high rotating speed of 2000 rpm for 20∼30 minutes after spraying the coupling agent; add the ethylene bis stearamide weighted according to the weight percentage, and keep stirring at the high rotating speed of 2000 rpm for 5∼10 minutes; add the polycaprolactam, antioxidant 1010 and maleic anhydride grafted ethylene-octene copolymer weighed according to the weight percentage, and keep stirring at the high rotating speed of 2000 rpm for 10∼20 minutes to obtain a mixed material.

Step 4: Put the mixed material obtained from Step 3 into a twin-screw extrusion granulator; process the mixed material by melt extrusion to produce wires; cool and dice the wires to obtain imitation metal engineering plastic composite granules. The specific technical parameters and conditions include: an auxiliary feeding system used for adding the mixed material at a feeding speed of 80 rpm; a lateral feeding system used for adding the glass fiber at a feeding speed of 60 rpm; a host screw rotating speed of 300 rpm; a first-area temperature of 225 °C, a second-area temperature of 230 °C, a third-area temperature of 235 °C, a fourth-area temperature of 240 °C, a fifth-area temperature of 245 °C, a sixth-area temperature of 250 °C, a seventh-area temperature of 255 °C, an eighth-area temperature of 255 °C, a ninth-area temperature of 260 °C, a tenth-area temperature of 260 °C, a die temperature of 250 °C; and a dicing speed of 280 rpm.

Step 5: Put the imitation metal engineering plastic composite granules into the plastic injection molding machine. The technical parameters for manufacturing the injection molded product include: a first-stage temperature of 255 °C, a second-stage temperature of 265 °C, a third-stage temperature of 275 °C, a fourth-stage temperature of 285 °C, a nozzle temperature of 280 °C, and a mold temperature of 140 °C.

The product manufactured according to the aforementioned composition and technique has a density of 2.47g/cm³, a tensile strength of 73MPa, an izod impact strength of 74J/m, and a thermal deformation temperature of 151 °C; and the product comes with a high surface luster and is free of pitting and wavy lines.

### [Embodiment 10]

The composition of the imitation metal engineering plastic composite material of this embodiment includes: 18% by weight of polycaprolactam, 47% by weight of a ferrite, 19% by weight of barium sulfate, 3% by weight of a maleic anhydride grafted ethylene-octene copolymer, 9.5% by weight of a glass fiber, 2% by weight of a coupling agent, and 0.5% by weight of antioxidant 1010.

Step 1: Weigh a ferrite and barium sulfate according to the weight percentage; add the ferrite and barium sulfate into a high-speed mixing machine; stir the ferrite and barium sulfate at a rotating speed of 1000 rpm for 20-60 minutes, and dry the ferrite and barium sulfate to a temperature up to 120 °C.

Step 2: Weigh a coupling agent according to the weight percentage; and spray the coupling agent uniformly onto the ferrite and barium sulfate.

Step 3: Keep stirring at a high rotating speed of 2000 rpm for 20∼30 minutes after spraying the coupling agent; add the ethylene bis stearamide weighed according to the weight percentage and keep stirring at the high rotating speed of 2000 rpm for approximately 5∼10 minutes; add the polycaprolactam, antioxidant 1010 and maleic anhydride grafted ethylene-octene copolymer weighed according to the weight percentage, and keep stirring at the high rotating speed of 2000 rpm for 10∼20 minutes to obtain a mixed material.

Step 4: Put the mixed material obtained from Step 3 into a twin-screw extrusion granulator; process the mixed material by melt extrusion to produce wires; cool and dice the wires to obtain imitation metal engineering plastic composite granules. The specific technical parameters include: an auxiliary feeding system used for adding the mixed material at a feeding speed of 80 rpm; a lateral feeding system used for adding the glass fiber at a feeding speed of 60 rpm; a host screw rotating speed of 300 rpm; a first-area temperature of 225 °C, a second-area temperature of 230 °C, a third-area temperature of 235 °C, a fourth-area temperature of 240 °C, a fifth-area temperature of 245 °C, a sixth-area temperature of 250 °C, a seventh-area temperature of 255 °C, an eighth-area temperature of 255 °C, a ninth-area temperature of 260 °C, a tenth-area temperature of 260 °C, a die temperature of 250 °C, and a dicing speed of 280 rpm.

Step 5: Put the imitation metal engineering plastic composite granules into the plastic injection molding machine. The technical parameters for manufacturing the injection molded product include: a first-stage temperature of 255 °C, a second-stage temperature of 265 °C, a third-stage temperature of 275 °C, a fourth-stage temperature of 285 °C, a nozzle temperature of 280 °C, and a mold temperature of 140 °C.

The product manufactured according to the aforementioned composition and technique has a density of 2.39g/cm³, a tensile strength of 67MPa, an izod impact strength of 61J/m, and a thermal deformation temperature of 153 °C; and the product comes with a high surface luster and is free of pitting and wavy lines.

### [Embodiment 11]

The composition of the imitation metal engineering plastic composite material of this embodiment includes: 5.3% by weight of polycaprolactam, 90% by weight of an iron powder, 3% by weight of a maleic anhydride grafted ethylene-octene copolymer, 0.4% by weight of ethylene bis stearamide, 0.3% by weight of polytetrafluoroethylene powder, 0.8% by weight of a coupling agent, 0.1% by weight of antioxidant 1010, and 0.1% by weight of antioxidant 168.

Step 1: Weigh an iron powder according to the weight percentage; add the iron powder into a high-speed mixing machine; stir the iron powder at a rotating speed of 1000 rpm for 20-60 minutes; and dry the iron powder to a temperature up to 120 °C.

Step 2: Weigh a coupling agent according to the weight percentage; and spray the coupling agent uniformly onto the iron powder

Step 3: Keep stirring at a high rotating speed of 2000 rpm for 20∼30 minutes after spraying the coupling agent; add the ethylene bis stearamide and polytetrafluoroethylene powder weighed according to the weight percentage, and keep stirring at the high rotating speed of 2000 rpm for approximately 5-10 minutes; add the polycaprolactam, antioxidant 1010, antioxidant 168 and maleic anhydride grafted ethylene-octene copolymer weighed according to the weight percentage, and keep stirring at the high rotating speed of 2000 rpm for 10∼20 minutes to obtain a mixed material.

Step 4: Put the mixed material obtained from Step 3 into a twin-screw extrusion granulator; process the mixed material by melt extrusion to produce wires; cool and dice the wires to obtain imitation metal engineering plastic composite granules. The specific technical parameters and conditions include: an auxiliary feeding system used for adding the mixed material at a feeding speed of 80 rpm; a host screw rotating speed of 300 rpm; a first-area temperature of 220 °C, a second-area temperature of 225 °C, a third-area temperature of 230 °C, a fourth-area temperature of 235 °C, a fifth-area temperature of 240 °C, a sixth-area temperature of 245 °C, a seventh-area temperature of 250 °C, an eighth-area temperature of 255 °C, a ninth-area temperature of 260 °C, a tenth-area temperature of 260 °C, a die temperature of 255 °C, and a dicing speed of 200 rpm.

Step 5: Put the imitation metal engineering plastic composite granules into the plastic injection molding machine. The technical parameters for manufacturing the injection molded product include: a first-stage temperature of 265 °C, a second-stage temperature of 275 °C, a third-stage temperature of 285 °C, a fourth-stage temperature of 295 °C, a nozzle temperature of 290 °C, and a mold temperature of 150 °C.

The product manufactured according to the aforementioned composition and technique has a density of 4.20g/cm³, a tensile strength of 47MPa, an izod impact strength of 56J/m, and a thermal deformation temperature of 129 °C; and the product comes with a high surface luster and is free of pitting and wavy lines.

In summation of the description of the foregoing embodiments, a combination of coupling agents and an appropriate toughener are used to minimize the effect of the large quantity of high-density fillers and mineral powders to the mechanical performance of the mixed system, such that the composite material of the present invention has high strength, tenacity, thermal deformation temperature and density.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. An imitation metal engineering plastic composite material, with a composition comprising:
an engineering thermoplastic with a weight percentage between 5%∼51%;
a high-density filler, with a weight percentage between 42%∼90%;
a mineral powder, with a weight percentage between 0%∼33%;
a glass fiber, with a weight percentage between 0%∼29%;
a toughener, with a weight percentage between 3%∼20%;
a coupling agent, with a weight percentage between 0.5%∼4%;
a lubricant, with a weight percentage between 0.3%∼2%; and
an antioxidant, with a weight percentage of between 0.2%∼0.5%,
wherein the weight percentage is based on the total weight of imitation metal engineering plastic composite material,
wherein the engineering thermoplastic is a compound selected from the collection of polyamide and polybutylene terephthalate, and the high-density filler is a metal powder having a density between 4∼10g/cm³ and an average granule diameter between 0.1∼100µm, and the mineral powder is an inorganic mineral powder having an average granule diameter between 0.1∼20µm, and the toughener is one selected from the collection of polyamide elastomer, maleic anhydride grafted polyolefin elastomer and maleic anhydride grafted styrene, and the coupling agent is a compound selected from the collection of a titanate coupling agent, an aluminate coupling agent, a zirconate coupling agent, and a silane coupling agent, and the lubricant is one selected from the collection of ethylene bis stearamide, ethylene bis lauramide, ethylene bis oleamide, ethylene bis stearamide graft modification substance, and fluoroelastomer, polytetrafluoroethylene powder, and the antioxidant is a compound selected from the collection of tetrakis[methylene-β-(3,5-di-tert-butyl-4-hydioxyphenyl)-propionate]methane, antioxidant 1010, and tris(2,4-di-tert-butylphenyl) phosphite.

2. The imitation metal engineering plastic composite material of claim 1, wherein the metal powder is one selected from the collection of an iron powder, a stainless steel powder, a copper powder, a nickel powder, a zinc powder, ferric oxide, barium ferrite, strontium ferrite, zinc oxide, and barium sulfate.

## Patentansprüche

1. Technisches Metallimitationskunststoffverbundmaterial mit einer Zusammensetzung, umfassend:
ein technisches Thermoplast in einem Gewichtsprozentanteil zwischen 5%∼51%,
einen hochdichter Füllstoff in einem Gewichtsprozentanteil zwischen 42%∼90%,
ein Mineralpulver in einem Gewichtsprozentanteil zwischen 0%∼33%,
Glasfasern in einem Gewichtsprozentanteil zwischen 0%∼29%,
einen Zähigkeitsvermittler (Toughener) in einem Gewichtsprozentanteil zwischen 3%∼20%,
ein Kupplungsreagenz in einem Gewichtsprozentanteil zwischen 0,5%∼4%,
ein Schmiermittel in einem Gewichtsprozentanteil zwischen 0,3%∼2%, und
ein Antioxidationsmittel in einem Gewichtsprozentanteil zwischen 0,2%∼0,5%,
wobei der Gewichtsprozentanteil auf das Gesamtgewicht des technischen Metallimitationskunststoffverbundmaterials bezogen ist,
wobei der technische Thermoplast eine Verbindung ist, die aus einer Sammlung mit Polyamid und Polybutylenterephthalat ausgewählt ist, wobei der hochdichte Füllstoff ein Metallpulver ist, das eine Dichte zwischen 4∼10 g/cm³ und einen mittleren Granulatdurchmesser zwischen 0,1∼100 µm hat, wobei das Mineralpulver ein anorganisches Mineralpulver mit einem mittleren Granulatdurchmesser zwischen 0,1∼20 µm ist, wobei der Zähigkeitsvermittler aus einer Sammlung mit Polyamid - Elastomer, Maleinsäureanhydrid-gepfropfte Polyolefin - Elastomer und Maleinsäureanhydrid-gepfropftes Styrol ausgewählt ist, wobei das Kupplungsreagenz eine Verbindung ist, die aus einer Sammlung mit Titanat - Kupplungsreagenzien, Aluminat - Kupplungsreagenzien, Zirkonat - Kupplungsreagenzien und Silan - Kupplungsreagenzien ausgewählt ist, wobei das Schmiermittel aus einer Sammlung mit Ethylenbisstearamid, Ethylenbislauramid, Ethylenbisoleamid, Ethylenbisstearamid-Pfropfungsmodifikationssubstanz, Fluorelastomer und Polytetrafluoroethylen - Pulver ausgewählt ist, und wobei das Antioxidationsmittel eine Verbindung ist, die aus einer Sammlung mit Tetrakis[methylen-β-(3,5-di-tert-butyl-4-hydroxyphenyl)-propionat]methan, Antioxidant 1010 und Tris(2,4-di-tert-butylphenyl)phosphit ausgewählt ist.

2. Technisches Metallimitationskunststoffverbundmaterial nach Anspruch 1, bei welchem das Metallpulver aus einer Sammlung mit Eisenpulver, Edelstahlpulver, Kupferpulver, Nickelpulver, Zinkpulver, Eisenoxid, Bariumferrit, Strontiumferrit, Zinkoxid und Bariumsulfat ausgewählt ist.

## Revendications

1. Matériau composite plastique d'ingénierie de métal d'imitation, avec une composition comprenant :
un thermoplastique d'ingénierie avec un pourcentage en poids entre 5 % ∼ 51 % ;
une charge haute densité, avec un pourcentage en poids entre 42 % ∼ 90 % ;
une poudre minérale, avec un pourcentage en poids entre 0 % ∼ 33 % ;
une fibre de verre, avec un pourcentage en poids entre 0 % ∼ 29 % ;
un durcisseur, avec un pourcentage en poids entre 3 % ∼ 20 % ;
un agent de couplage, avec un pourcentage en poids entre 0,5 % ∼ 4 % ;
un lubrifiant, avec un pourcentage en poids entre 0,3 % ∼ 2% ; et
un antioxydant, avec un pourcentage en poids entre 0,2 % ∼ 0,5 %,
dans lequel le pourcentage en poids est basé sur le poids total du matériau composite plastique d'ingénierie de métal d'imitation,
dans lequel le thermoplastique d'ingénierie est un composé choisi dans l'ensemble du polyamide et du polytéréphtalate de butylène, et la charge haute densité est une poudre de métal ayant une masse volumique entre 4 ∼ 10 g/cm³ et un diamètre de granule moyen entre 0,1 ∼ 100 µm, et la poudre minérale est une poudre minérale inorganique ayant un diamètre de granule moyen entre 0,1 ∼ 20 µm, et le durcisseur est un durcisseur choisi dans l'ensemble d'un élastomère polyamide, d'un élastomère polyoléfine greffé d'anhydride maléique et d'un styrène greffé d'anhydride maléique, et l'agent de couplage est un composé choisi dans l'ensemble d'un agent de couplage titanate, d'un agent de couplage aluminate, d'un agent de couplage zirconate, et d'un agent de couplage silane, et le lubrifiant est un lubrifiant choisi dans l'ensemble de l'éthylène bis stéaramide, de l'éthylène bis lauramide, de l'éthylène bis oléamide, d'une substance de modification greffée d'éthylène bis stéaramide, et d'un fluoroélastomère, d'une poudre de polytétrafluoroéthylène, et l'antioxydant est un composé choisi dans l'ensemble du tétrakis[méthylène-β-(3,5-di-tert-butyl-4-hydroxyphenyl)-propionate]-méthane, de l'antioxydant 1010, et du tris(2,4-di-tert-butylphényl)-phosphite.

2. Matériau composite plastique d'ingénierie de métal d'imitation selon la revendication 1, dans lequel la poudre de métal est une poudre de métal choisie dans l'ensemble d'une poudre de fer, d'une poudre d'acier inoxydable, d'une poudre de cuivre, d'une poudre de nickel, d'une poudre de zinc, de l'oxyde ferrique, du ferrite de baryum, du ferrite de strontium, de l'oxyde de zinc, et du sulfate de baryum.
